# EUROPÄISCHE PATENTANMELDUNG

(11) **EP 3 367 544 A1**
(43) Veröffentlichungstag der Anmeldung: **29.08.2018**
(21) Anmeldenummer: 17157298.5
(22) Anmeldetag: 22.02.2017
(51) Int. Cl.: H02K 9/10

(54) **DYNAMOELEKTRISCHE MASCHINE MIT EINEM KÜHLELEMENT**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft eine dynamoelektrische Maschine (1) mit einem Stator (2) mit einem flussleitenden Element, insbesondere einem Blechpaket, wobei das flussleitende Element Nuten aufweist, in denen ein Wicklungssystem angeordnet ist, das an den Stirnseiten des magnetflussleitenden Elements Wickelköpfe (6) aufweist,
- mit einem Rotor (3), der durch einen Luftspalt (4) vom Stator (2) beabstandet ist, und durch in Lagerschilden (5) positionierten Lagern (10) um eine Achse (14) drehbar gelagert ist,
- mit einem dehnbaren Kühlelement (7), das zumindest abschnittsweise den Wickelkopf (6) umschmiegt und durch ein Kühlmedium durchströmbar ist.

## Beschreibung

Die Erfindung betrifft eine dynamoelektrische Maschine mit einem Kühlelement der Wickelköpfe des Stators.

Zur Erhöhung der Leistungsdichte und Effizienz von dynamoelektrischen Maschinen werden zur Kühlung der Wicklung des Stators vorzugsweise flüssigkeitsgekühlte Gehäuse eingesetzt. Die Wickelköpfe an den Stirnseiten des Blechpakets des Stators erweisen sich dabei aber als sogenannte Heißpunkte. Dort herrschen Temperaturen bis ca. 200°C. Deshalb wird versucht, insbesondere die Wickelköpfe der Wicklung des Stators zu kühlen. Problematisch sind hierbei zum einen die ungleichmäßige Geometrie der Wickelköpfe, sowie die erforderliche sichere Isolation zu einem Kühlmedium. Des Weiteren ist der Wickelkopf nicht flüssigkeitsdicht zum Blechpaket des Stators abgegrenzt. Eine Umhüllung und Abdichtung nur des Wickelkopfes bei gleichzeitiger Kühlung ist demnach äußerst schwierig zu realisieren.

So ist aus der US 6 639 334 B2 eine Sprühnebelkühlung mit elektrisch nicht leitendem Transformatoröl bekannt, dabei ist ein hoher Isolationsaufwand am Wickelkopf vorzusehen, des Weiteren muss das Gehäuse insgesamt abgedichtet sein.

Aus der DE 10 2012 221 325 A1 ist eine dynamoelektrische Maschine bekannt, bei der der Wickelkopf eine eingebundene Schlauchspirale mit geringem Querschnitt aufweist. Dabei ist nachteilig, dass die Anlagefläche zum Abtransport der anfallenden Wärme sehr gering ist.

Aus der EP 1 727 263 A2 ist eine komplett vergossene dynamoelektrische Maschine mit eingelegtem Kühlrohr bekannt.

Aus der US 6 914 354 B2 ist eine dynamoelektrische Maschine im Ölsumpf bekannt. Auch dabei ist der erhöhte Aufwand an das gesamte Isolationssystem nachteilig.

Ausgehend davon liegt der Erfindung die Aufgabe zugrunde, in einfacher Art und Weise eine Kühlung, insbesondere des Wickelkopfes eines Stators einer dynamoelektrischen Maschine zu schaffen, die effizient ist und auch nachträglich bei dynamoelektrischen Maschinen vorgesehen werden kann.

Die Lösung der gestellten Aufgabe gelingt durch eine dynamoelektrische Maschine mit einem Stator mit einem flussleitenden Element, insbesondere einem Blechpaket, wobei das flussleitende Element Nuten aufweist, in denen ein Wicklungssystem angeordnet ist, das an den Stirnseiten des magnetflussleitenden Elements Wickelköpfe aufweist,
- mit einem Rotor, der durch einen Luftspalt vom Stator beabstandet ist, und durch in Lagerschilden positionierten Lagern um eine Achse drehbar gelagert ist,
- mit einem dehnbaren Kühlelement, das zumindest abschnittsweise den Wickelkopf umschmiegt und durch ein Kühlmedium durchströmbar ist.

Dabei wird nunmehr erfindungsgemäß ein Kühlelement aus einem temperaturfesten dehnbaren Gummi oder Kunststoff von außen auf den Wickelkopf aufgelegt. Durch zumindest einen Einlauf und einen Auslauf an dem Kühlelement ist dieses an einen externen Kühlkreislauf anschließbar. Bei einer bestimmten vorgebbaren Durchflussmenge eines Kühlmediums durch das Kühlelement stellt sich im Innern des Kühlelements ein erhöhter Druck ein, wodurch sich das Kühlelement in seinem möglichen Freiraum aufweitet. Diese Ausdehnung wird von den verschiedenen angrenzenden Bauteilen, wie z.B. Gehäuse, Lagerschild, etc. räumlich begrenzt. Zu diesen Bauteilen selbst gehört neben dem Gehäuse und dem Lagerschild auch der zu kühlende Wickelkopf.

Durch das dehnbare Material des Kühlelements schmiegt sich nun dieses aufgeblähte Kühlelement an die vorhandene Kontur des Wickelkopfes an. Dabei stellen Unsymmetrien in der Form des Wickelkopfes nunmehr kein Problem dar. Der Bauraum, für das unter Druck ausgedehnte Kühlelement ist begrenzt, so dass eine Beschädigung des Kühlelements durch zu hohen Druck auszuschließen ist, ähnlich einem Fahrradreifen auf der Felge, der mit einem Radmantel umhüllt ist.

Das Kühlelement ist aus einem elektrisch isolierenden Material, so dass neben Öl auch Wasser als Kühlmittel eingesetzt werden kann. Der Vorteil vom Wasser ist, dass die Wärmekapazität von Wasser mindestens doppelt so hoch ist als die des Öls.

Vorteilhafterweise kann dieser Kühlkreislauf mit einem hocheffizienten wassergekühlten Gehäuse kombiniert werden, so dass letztlich nur ein Kühlkreislauf mit dem Kühlmedium erforderlich ist, im Vergleich zu einem wassergekühlten Gehäuse einer dynamoelektrischen Maschine, das mit einer Ölkühlung der Wickelköpfe kombiniert ist.

Die Durchflussmenge ist je nach Maschinentyp, Kühlmediums, Betriebsart der dynamoelektrischen Maschine und Größe des Kühlelements unterschiedlich, liegt aber im Bereich kleinerer Maschinen, bei fünf bis fünfzehn Liter pro Minute, bei einem Druck von ca. 2 bar.

Das Kühlelement vorteilhaft als Kühlreifen ausgeführt, ist nicht mit den anderen Bauteilen der dynamoelektrischen Maschine fest verbunden und kann somit einfach ausgetauscht, bzw. für Wartungsarbeiten an der Maschine entnommen und anschließend wieder eingesetzt werden.

Ebenso ist ein nachträglicher Einbau in dynamoelektrischen Maschinen möglich.

Die Erfindung sowie weitere vorteilhafte Ausgestaltungen der Erfindung werden anhand folgender Ausführungsbeispiele prinzipiell dargestellt. Darin zeigen:
- FIG 1: einen prinzipiellen Längsschnitt einer dynamoelektrischen Maschine,
- FIG 2: ein Kühlelement in Seitenansicht,
- FIG 3: eine perspektivische Darstellung eines Kühlelements,
- FIG 4: ein Querschnitt des Kühlelements,
- FIG 5: einen perspektivischen Teilausschnitt des Kühlelements in eingebautem Zustand,
- FIG 6: einen Querschnitt des Kühlelements im eingebauten Zustand,
- FIG 7: einen Teillängsschnitt der dynamoelektrischen Maschine,
- FIG 8: ein weiterer Teillängsschnitt der elektrischen Maschine.

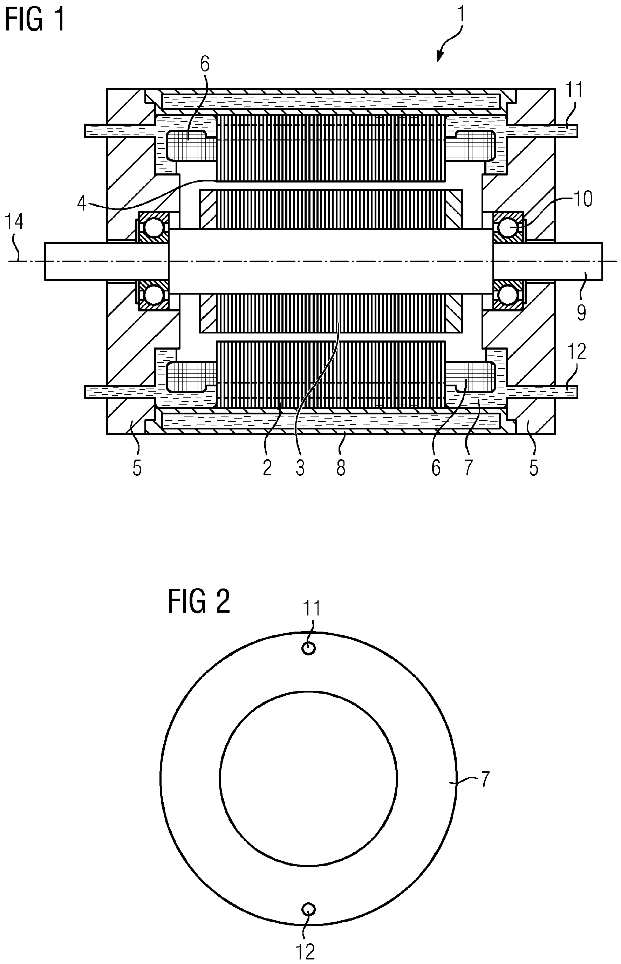

FIG 1 zeigt in einem Längsschnitt eine prinzipiell dargestellte dynamoelektrische Maschine 1, mit einem Stator 2, der in axial verlaufenden Nuten, die zum Luftspalt 4 der dynamoelektrische Maschine 1 weisen, ein Wicklungssystem aufweist. Dieses Wicklungssystem bildet an den Stirnseiten des Stators 2 jeweils einen Wickelkopf 6 aus. Das Wicklungssystem kann dabei aus Zahnspulen, gesehnten Spulen oder Formspulen bestehen.

Bei Bestromung des Wicklungssystems des Stators 2 steht dieser in elektromagnetischer Wechselwirkung mit einem Rotor 3 und führt somit zu einer Rotation der Welle 9 um eine Achse 14. Die Welle 9 wird dabei durch Lager 10, die in einem Lagerschild 11 gehalten sind, drehbar gehalten. Der Rotor 3 kann dabei als Reluktanzrotor, als Kurzschlusskäfigläufer oder als Läufer einer permanenterregten Synchronmaschine aber auch als Läufer mit einer elektrischen Erregung über Schleifringe ausgeführt sein.

Um nunmehr vor allem die Wickelköpfe 6 des Stators 2, die konstruktionsbedingt Heißpunkte der dynamoelektrischen Maschine 1 bilden, ausreichend zu kühlen, wird zumindest abschnittsweise um den Wickelkopf 6 ein Kühlelement 7 vorgesehen.

Dieses Kühlelement 7 weist ein oder mehrere Materialien auf mit folgenden Material-Eigenschaften auf, dehnbar, elektrisch isolierend, temperaturstabil in einem vorgegebenen Temperaturbereich und ggf. zumindest innen oder außen säurebeständig. Dieses Kühlelement 7 ist in dem Bauraum zwischen Stirnseite des Stators 2, Wickelkopf 6, einem wassergekühlten Gehäuse 8 und dem Lagerschild 5 eingesetzt. Durch einen vorgebbaren Druck von ca. 2 bar eines gas- oder fluidförmigen Kühlmediums, wie Öl, Wasser oder Luft, in dem Kühlelement 7 spannt sich dieses Kühlelement 7 direkt in den verbleibenden Bauraum ein, und bewirkt somit eine vollflächige Kontaktierung des Wickelkopfes 6.

Je nach Aufstellungsort der dynamoelektrischen Maschine 1 weist das Fluid vor allem in klimatisch herausfordernden Umgebungen wie z.B. Frostumgebungen auch Mischungen mit Frostschutzmittel auf, um in Stillstandszeiten der dynamoelektrischen Maschine 1 die Einsatzbereitschaft zu gewährleisten.

In dem Kühlelement 7 kann auch ein Kältemittel vorgesehen sein; damit bildet das Kühlelement 7 einen Teil eines thermodynamischen Kreisprozesses.

Durch die vollflächige Kontaktierung des Kühlelements 7 mit benachbarten Bauteilen und vor allem mit dem Wickelkopf 6, gelingt ein äußerst effizienter Temperaturübergang vom Wickelkopf 6 und/oder der Stirnseite des Stator 2 und/oder Lagerschild 5 auf das Kühlmedium des Kühlelements 7. Durch zusätzliche Anbindung bzw. Kontaktierung des Kühlelements 7 im "aufgeblasenen" Zustand, wird gleichzeitig ein thermischer Kontakt zum flüssigkeitsgekühlten Gehäuse 8 hergestellt. Damit erfolgt sowohl ein Temperaturübertrag in das wassergekühlte Gehäuse und/oder ein Temperaturübertrag aus dem wassergekühlten Gehäuse 8 in das Kühlelement 7.

Zulauf 11 und Ablauf 12 werden an einen externen Kühlkreis angeschlossen, der auch mit dem wassergekühlten Gehäuse 8 strömungsmäßig in Verbindung stehen kann.

Das Kühlelement 7 nach FIG 2 ist im Wesentlichen reifenförmig ausgebildet und weist einen Zulauf 11 und einen Ablauf 12 auf, die auf der gleichen Seite des Kühlelements 7 angeordnet sind. Damit ist der Einsatz auf einer Stirnseite des Stators 2 vergleichsweise einfach zu realisieren, nämlich in dem zunächst das Kühlelement 7 um den Wickelkopf 6 vorpositioniert wird und anschließend das Lagerschild unter Berücksichtigung von Zulauf 11 und Ablauf 12 angebracht wird. Durch Beaufschlagung des Kühlelements 7 mit einem Kühlmedium presst sich nunmehr das Kühlelement 7, in diesem Fall der Kühlreifen in den verbleibenden Hohlraum und sorgt so für eine ausreichende thermische Kontaktierung und damit für eine Temperaturübertragung.

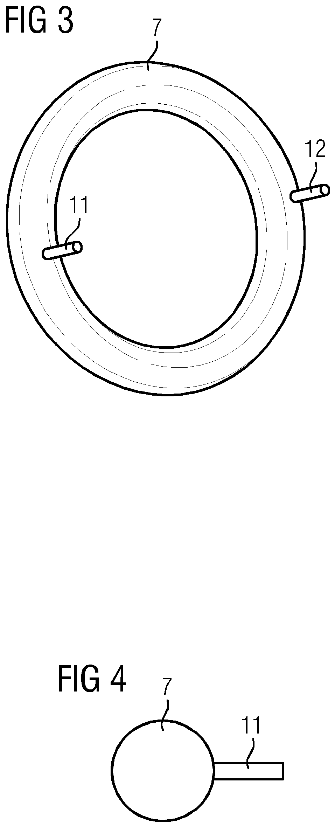

FIG 3 zeigt den Kühlreifen vor der Montage in der dynamoelektrischen Maschine 1 mit Zulauf 11 und Ablauf 12 auf einer Seite des Kühlelements 7.

In einem Querschnitt gemäß FIG 4 wird das reifenförmige Ausgestalten des Kühlelements 7 vor der Montage gezeigt. Die rundliche Querschnittsform, ebenso wie eine reifenähnliche Formgebung des Kühlelements 7 sind beispielhaft und können demnach auch mehreckige Formen mit abgerundeten Ecken annehmen, wie z.B. Quaderform annehmen.

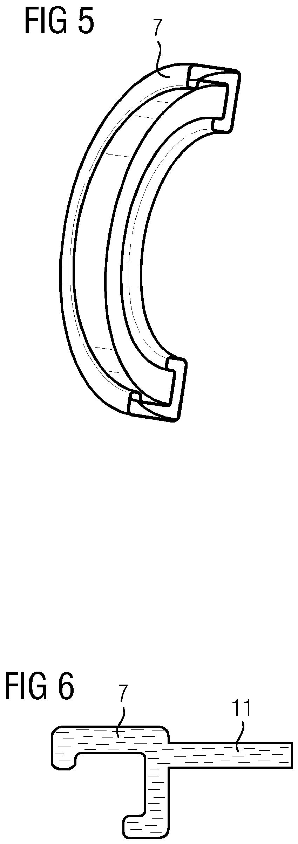

FIG 5 zeigt in einer Teilansicht einer perspektivischen Darstellung des Kühlelements 7, wie sich dieses Kühlelement 7, das als Reifen vor der Montage gemäß FIG 3 und FIG 4 ausgebildet ist, sich in den verbleibenden Hohlraum zwischen den Bauteilen wie Gehäuse 8, Stirnseite des Stators 2, Wickelkopf 6 und Lagerschild 5 einzwängt bzw. anpasst, was auch in FIG 6 in einem Querschnitt prinzipiell darstellt ist.

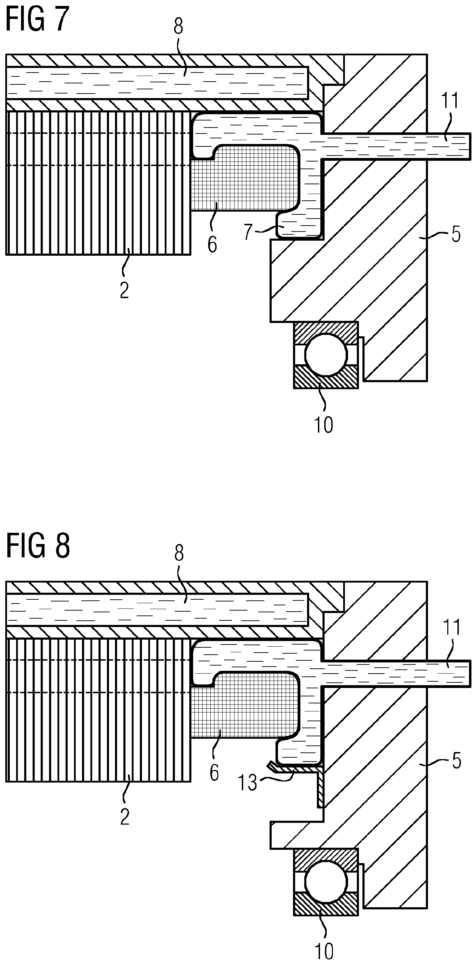

FIG 7 zeigt in einer Detaildarstellung einen Teillängsschnitt der dynamoelektrischen Maschine 1, wobei das Kühlelement 7 den Wickelkopf nahezu vollständig umgreift. Durch die vollflächige Kontaktierung des Kühlelements 7 mit benachbarten Bauteilen und vor allem mit dem Wickelkopf 6, gelingt ein äußerst effizienter Temperaturübergang vom Wickelkopf 6 und/ oder der Stirnseite des Stator 2 und/oder Lagerschild 5 auf das Kühlmedium des Kühlelements 7.

FIG 8 zeigt eine Möglichkeit diesen Umhüllungsgrad zu steigern, in dem ein zusätzliches Bauelement 13 auf der Innenseite des Lagerschildes 5 angebracht ist, das das Kühlelement 7 auch im radial inneren Bereich des Wickelkopfes 6 abstützt. Das Bauelement 13 bewirkt so auch dort einen ausreichenden Anpressdruck des Kühlelements 7 am Wickelkopf 6 bewirkt.

Das Bauelement 13 ist vorzugsweise kragenförmig ausgebildet am Lagerschild 5 angebracht und verläuft im Wesentlichen äquidistant zum Wickelkopf 6 um einen ausreichenden und gleichmäßigen Anpressdruck zu bewirken.

## Patentansprüche

1. Dynamoelektrische Maschine (1) mit einem Stator (2) mit einem flussleitenden Element, insbesondere einem Blechpaket, wobei das flussleitende Element Nuten aufweist, in denen ein Wicklungssystem angeordnet ist, das an den Stirnseiten des magnetflussleitenden Elements Wickelköpfe (6) aufweist,
- mit einem Rotor (3), der durch einen Luftspalt (4) vom Stator (2) beabstandet ist, und durch in Lagerschilden (5) positionierten Lagern (10) um eine Achse (14) drehbar gelagert ist,
- mit einem dehnbaren Kühlelement (7), das zumindest abschnittsweise den Wickelkopf (6) umschmiegt und durch ein Kühlmedium durchströmbar ist.

2. Dynamoelektrische Maschine (1) nach Anspruch 1, **dadurch gekennzeichnet, dass** das dehnbare Kühlelement (7) aus elektrisch isolierendem Material ist.

3. Dynamoelektrische Maschine (1) nach Anspruch 1 oder 2, , **dadurch gekennzeichnet, dass** das dehnbare Kühlelement (7) zwischen Lagerschild (5), Gehäuse (8) und Wickelkopf (6) mittels eines vorgebbaren Druckes des Kühlmediums im Kühlelement (7) eingespannt ist.

4. Dynamoelektrische Maschine (1) nach einem der vorhergehenden Ansprüche, **dadurch gekennzeichnet, dass** das Kühlmedium gasförmig ist oder als Fluid vorliegt, wie z.B. Öl und/oder Wasser ist.

5. Dynamoelektrische Maschine (1) nach einem der vorhergehenden Ansprüche, **dadurch gekennzeichnet, dass** radial innerhalb des Wickelkopfes (6) ein Bauelement (13) vorgesehen ist, das das Kühlelement (7) abstützt und so einen Umhüllungsgrad des Wickelkopfes (6) durch das Kühlelement (7) vergrößert.

6. Dynamoelektrische Maschine (1) nach Anspruch 5, **dadurch gekennzeichnet, dass** das Bauelement (13) kragenförmig ausgebildet ist und am Lagerschild (5) angebracht ist.
